# EUROPÄISCHE PATENTANMELDUNG

(11) **EP 1 612 452 A1**
(43) Veröffentlichungstag der Anmeldung: **04.01.2006**
(21) Anmeldenummer: 04015689.5
(22) Anmeldetag: 02.07.2004
(51) Int. Cl.: F16H 25/24

(54) **Transformationselement zur Umwandlung einer Drehbewegung in eine Längsbewegung**

(71) Anmelder: Siemens Schweiz AG, 8047 Zürich (CH)
(72) Erfinder: Evertz, Jörg, 8006 Zürich (CH); Schütz, Martin, 8055 Zürich (CH)
(74) Vertreter: Weise, Wolfgang

(57) **Zusammenfassung**

Ein Transformationselement zur Umwandlung einer Drehbewegung in eine Längsbewegung weist einen Wickel (2) aus einem spiralförmig entlang einer Zentrumsachse (10) aufgewickelten Band (1) und ein Läuferelement (3) auf. Wenigstens ein Ende (11) des Bandes (1) ist gegen eine zur Zentrumsachse (10) parallele, in eine erste Richtung gerichtete Verschiebung gesichert. Das Läuferelement (3) ist zwischen zwei Windungen des Wickels (2) angeordnet und an einer Halterung (6; 6a) befestigt. Durch Drehen der Halterung (6; 6a) oder der Wickels (2) um die Zentrumsachse (10) ist das Läuferelement (3) auf dem Band (1) verschiebbar. Eine längs der Zentrumsachse (10) zwischen dem Läuferelement (3) und einem Ende (11; 13) des Bandes (1) auftretenden Translation ist beispielsweise als Vorschub oder Antrieb nutzbar. Das Transformationselement ist beispielsweise zum Betätigen eines Ventilstössels einsetzbar und ermöglicht, verglichen mit bekannten Systemen, einen hohen Wirkungsgrad bei kleiner Steigung.

## Beschreibung

Die Erfindung bezieht sich auf ein Verfahren zur Umwandlung einer Drehbewegung in eine Längsbewegung und auf ein Transformationselement, mit dem eine Drehbewegung in eine Längsbewegung umwandelbar ist.

Solche Transformationselemente oder Verfahren werden nutzbringend in Antrieben verwendet, wo beispielsweise die Drehbewegung des Rotors eines Motors in eine vom Drehsinn des Rotors abhängige Längsbewegung, beispielsweise in eine geradlinige Hin- oder Herbewegung, umzuwandeln ist.

Derartige Transformationselemente oder Verfahren sind also allgemein zur Koppelung von Antriebs- und Abtriebsgliedern in verschieden Gebieten der Technik vorteilhaft einsetzbar, so ist beispielsweise ein Vorschub bei einer Verpackungsmaschine oder bei einer Förderanlage gemäss der vorliegenden Erfindung ausführbar.

Solche Transformationselemente und Verfahren sind insbesondere auch in Ventil-, Schieber- oder Klappenantrieben einsetzbar, in denen ein Stellglied durch eine Längsbewegung zu betätigen ist und die Stellenergie beispielsweise von einem Elektromotor geliefert wird. Solche Transformationselemente sind damit beispielhaft auch in regelbaren Antrieben für Stellglieder in der Heizungs-, Lüftungs-, Raumklima- und Kältetechnik einsetzbar.

Es ist allgemein bekannt, zur Umwandlung einer Drehbewegung in eine Längsbewegung Bewegungsschrauben oder Gewindespindeln in Kombination mit einem Mutterelement einzusetzen, wobei entweder ein Gewindebolzen oder ein passendes Mutterelement die Drehbewegung ausführt.

Bekannte Gewindespindel-Mutter-Einrichtungen haben die Eigenschaft, dass die Materialstärke eines die übertragbare Kraft bestimmenden Gewindeganges stets kleiner als die Steigung des eingesetzten Gewindes ist. Gewinde mit grösserer Steigung sind also hinsichtlich der Belastbarkeit gegenüber Feingewinden zu bevorzugen. Dadurch darf jedoch für eine gegebene Kraft, die bei der geradlinigen Bewegung zu übertragen ist, eine minimale Steigung nicht unterschritten werden.

Bekannte Gewindespindel-Mutter-Einrichtungen haben femer die Eigenschaft, dass die erzeugbare Längsbewegung direkt von der Steigung des eingesetzten Gewindes abhängig ist, welche konstant ist. Nichtlineare Längsbewegungen sind also mit standardisierten Gewindespindel-Mutter-Einrichtungen nur mit zusätzlichem Aufwand realisierbar.

Bekannte Gewindespindel-Mutter-Einrichtungen weisen überdies eine hohe Reibung und ein gewisses Spiel auf. Das Spiel zwischen der Gewindespindel und dem Mutterelement wirkt sich insbesondere bei einer Bewegungsumkehr nachteilig aus. Solche Nachteile wären beispielsweise durch eine Kugelumlaufspindel vermeidbar, was jedoch nur bei relativ grossen Steigungen praktikabel ist.

Der Erfindung liegt die Aufgabe zu Grunde, ein Transformationselement zu schaffen und ein Verfahren anzugeben, mit denen eine Drehbewegung in eine Längsbewegung umwandelbar ist und welche die oben genannten Nachteile von Gewindespindel-Mutter-Einrichtungen vermeiden und mit denen insbesondere ein hoher Wirkungsgrad und eine kleine Steigung auch bei grosser Kraftübertragung realisierbar sind.

Die genannte Aufgabe wird erfindungsgemäss durch die Merkmale der Ansprüche 1 und 24 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

### Es zeigen:

- Fig. 1: eine Darstellung mit einem helixförmig gewickelten Band und einem auf dem Band bewegbaren Läuferelement,
- Fig. 2: eine Schnittdarstellung eines Transformationselements zur Umwandlung einer Drehbewegung in eine Längsbewegung,
- Fig. 3: eine Schnittdarstellung einer Variante des erfindungsgemässen Transformationselements,
- Fig. 4: eine Schnittdarstellung mit einer Variante des Läuferelements,
- Fig. 5a: eine drei Einzelbänder aufweisende Variante des Bandes und drei Einzelläufer,
- Fig. 5b: eine Seitenansicht der Variante gemäss der Fig. 5a,
- Fig. 6a: eine Schnittdarstellung eines Transformationselements mit den in Fig. 5a und Fig. 5b dargestellten drei Einzelbändern und den drei Einzelläufern,
- Fig. 6b: eine Abwicklung des Transformationselements gemäss der Fig. 6a,
- Fig. 7: ein helixförmig gewickeltes Band mit rechteckigem Querschnitt,
- Fig. 8: ein helixförmig gewickeltes Band mit einem Abstützungselement mit abgeschrägter Bandauflage,
- Fig. 9: ein helixförmig gewickeltes Band mit gebogenen Auflageflächen,
- Fig. 10: zwei ineinander geschobene helixförmig gewickelte Einzelbänder mit unterschiedlichen Querschnittsformen,
- Fig. 11: ein Teil eines Läuferelements mit Kegelrollen, und
- Fig. 12: ein Teil eines Läuferelements mit Kugelumlaufrollen.

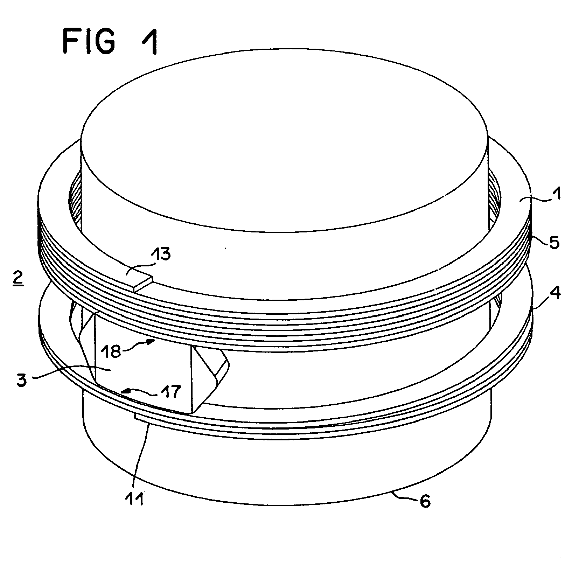

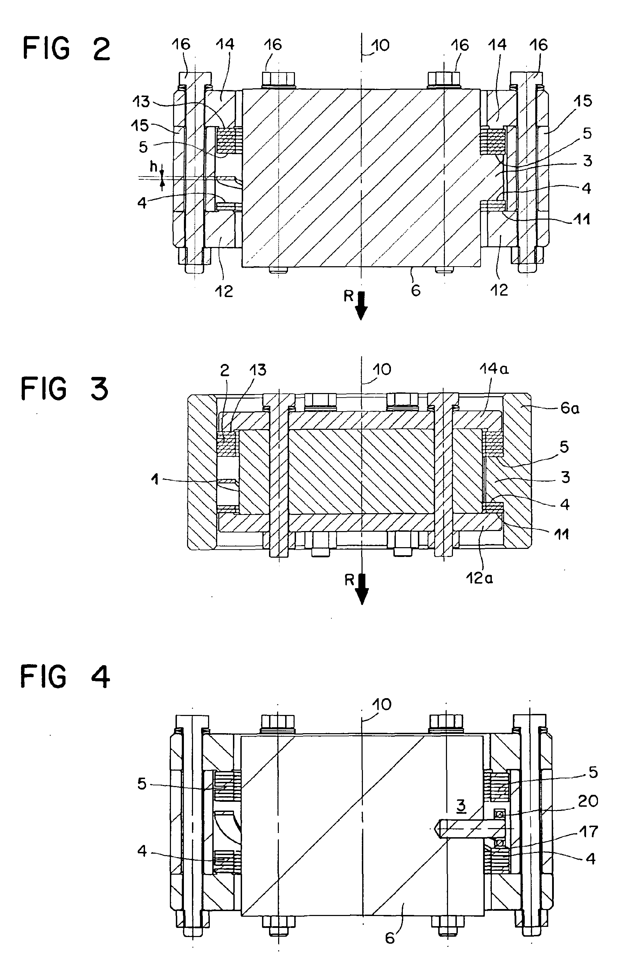

In der Fig. 1 bezeichnet 1 ein spiralförmig aufgewickeltes Band. Das Band 1 weist mehrere Windungen auf, die mit gleichem Durchmesser vorzugsweise anliegend zu einem einlagigen Wickel 2 gewickelt sind. Ein Läuferelement 3 ist zwischen benachbarten Windungen des Wickels 2 auf dem Band 1 verschiebbar angeordnet, wobei das Läuferelement 3 den Wickel 2 aufspreizt und in eine erste Wickelzone 4 und eine zweite Wickelzone 5 aufteilt. Das Läuferelement 3 ist an einer Halterung 6 befestigt. Die Halterung 6 und der Wickel 2 sind um eine gemeinsame Zentrumsachse 10 (Fig. 2) gegeneinander verdrehbar angeordnet.

Ein erstes Ende 11 des Bandes 1 liegt an einem ersten Abstützungselement 12 auf, welches die erste Wickelzone 4 gegen eine axiale Verschiebung in einer Richtung R auf der Zentrumsachse 10 sichert. Ein zweites Ende 13 des Bandes 1 liegt an einem zweiten Abstützungselement 14 auf, welches die zweite Wickelzone 5 gegen eine axiale Verschiebung entgegen der Richtung R auf der Zentrumsachse 10 sichert.

Die beiden Abstützungselemente 12 und 14 sind mit Vorteil in einem bestimmten Abstand voneinander angeordnet, der beispielsweise durch Distanzhülsen 15 definiert wird. Der besagte Abstand ergibt sich aus der Summe einer Länge, den der Wickel 2 parallel zur Zentrumsachse 10 einnimmt und einer Weite des Läuferelements 3, mit der das Läuferelement 3 die beiden Wickelzonen 4 und 5 auseinander schiebt. Zur Vermeidung eines axialen Spiels parallel zur Zentrumsachse 10, wird das Band 1 vorteilhafterweise mit leichter Vorspannung gewickelt und der Wickel 2 zwischen den beiden Abstützungselementen 12 und 14 eingespannt.

Die beiden Abstützungselemente 12 und 14 sind beispielsweise durch Schraubverbindungen 16 miteinander verbunden.

Vorzugsweise sind die beiden Abstützungselemente 12 und 14 so ausgestaltet, dass die äusserste Windung der entsprechenden Wickelzone 4 oder 5 möglichst über den ganzen Kreisumfang der Windung am jeweiligen Abstützungselement 12 beziehungsweise 14 aufliegt.

Durch ein gegenseitiges Verdrehen der Halterung 6 und des Wickels 2 um die gemeinsame Zentrumsachse 10 ist das Läuferelement 3 auf einer durch das Band 1 gebildeten Helix verschiebbar. Abhängig vom Drehsinn des Verdrehens und vom Umlaufsinn des Wickels 2 ist das Läuferelement 3 zwischen den beiden Enden 11 und 13 bewegbar.

Beim gegenseitige Verdrehen der Halterung 6 und des Wickels 2 wird ein von einem Motor erzeugtes Antriebsmoment entweder an der Halterung 6 oder am Abstützungselement 12 oder 14 angelegt. Bei Bedarf ist das erste Ende 11 des Bandes am ersten Abstützungselement 12 und das zweite Ende 13 am zweiten Abstützungselement 14 befestigt.

In der Fig. 1 ist das Band 1 vom ersten Ende 11 aus zum zweiten Ende 13 hin entgegen dem Uhrzeigersinn gewickelt. Wenn eine Rotation des Wickels 2 verhindert wird, ist das Läuferelement 3 durch ein Drehen der Halterung 6 entgegen dem Uhrzeigersinn der Helix folgend gegen das zweite Ende 13 hin und durch ein Drehen der Halterung 6 im Uhrzeigersinn gegen das erste Ende 11 hin bewegbar. Das gegenseitige Verdrehen der Halterung 6 und des Wickels 2 um die gemeinsame Zentrumsachse 10 bewirkt eine relative Verschiebung der Halterung 6 und des Wickels 2 parallel zur Zentrumsachse 10, wobei die Verschiebung von einer Höhe h (Fig. 2) des Bandes 2 abhängig ist. Bei feststehendem Wickel 2 ist die Halterung 6 durch Drehen im Uhrzeigersinn in Richtung R und durch Drehen gegen den Uhrzeigersinn entgegen der Richtung R verschiebbar, wobei die Halterung 6 pro Umdrehung um die Höhe h des Bandes 1 parallel zur Zentrumsachse 10 verschiebbar ist.

Ein vorteilhaftes Verfahren zur Umwandlung einer Drehbewegung in eine Längsbewegung mit Hilfe des zu einem einlagigen Wickel 2 geformten Bandes 1 umfasst vier wesentliche Schritte:

Erstens, ein Anordnen des Läuferelements 3 zwischen zwei benachbarten Windungen des Wickels 2 derart, dass der Wickel 2 durch das Läuferelement 3 aufgespreizt wird.

Zweitens, ein Abstützen einer äussersten Windung des Wickels auf einer Seite des Wickels, gegen den die Längsbewegung zu generieren ist.

Drittens, ein Erzeugen einer relativen Drehbewegung zwischen dem Wickel 2 und dem Läuferelement 3 um eine gemeinsame Zentrumsachse 10 derart, dass das Läuferelement 3 in einem bestimmten Abstand zur Zentrumsachse 10 auf einer durch den Wickel 2 bestimmten helixförmigen Bahn um die Zentrumsachse 10 und längs der Zentrumsachse 10 bewegt wird.

Viertens, ein Nutzen der längs der Zentrumsachse 10 zwischen dem Läuferelement 3 und dem Ende 11 oder 13 des Bandes 1 auftretenden Bewegungskomponente.

Der wenigstens einseitig abgestützte Wickel 2 und die das Läuferelement 3 tragende Halterung 6 bilden ein universelles Transformationselement zur Umwandlung einer Drehbewegung in eine Längsbewegung. Dabei ist eine Transformation grundsätzlich in einer von vier nachfolgend beschriebenen Basisvarianten realisierbar, wobei das Transformationselement, je nach gewählter Basisvariante, durch allgemein bekannte Konstruktionsmassnahmen derart in ein System einzubinden ist, dass erforderliche Bewegungen zugelassen und notwendige Blockierungen erreicht werden. Zur Einbindung des Transformationselements in ein System sind insbesondere die Halterung 6 und die beiden Abstützungselemente 12 oder 14 funktionsgerecht auszugestalten.

Basisvariante 1: Der Wickel 2 ist feststehend, das heisst, das Transformationselement ist so eingesetzt, dass der Wickel 2 - bezogen auf die Zentrumsachse 10 - weder verschiebbar noch drehbar angeordnet ist. Die das Läuferelement 3 tragende Halterung 6 ist um die Zentrumsachse 10 drehbar und parallel zur Zentrumsachse 10 verschiebbar gelagert. An der Halterung 6 ist also ein Drehantrieb anzukoppeln und auch die Längsbewegung zu nutzen.

Basisvariante 2: Das Transformationselement ist so eingesetzt, dass der Wickel 2 gegen ein Verdrehen um die Zentrumsachse 10 gesichert, jedoch parallel zur Zentrumsachse 10 verschiebbar ist. Die das Läuferelement 3 tragende Halterung 6 ist um die Zentrumsachse 10 drehbar gelagert und gegen eine zur Zentrumsachse 10 parallele Verschiebung gesichert. An der Halterung 6 ist also der Drehantrieb anzukoppeln und die Längsbewegung des Wickels 2 ist mit Vorteil über das Abstützungselement 12 oder 14 zu nutzen.

Basisvariante 3: Die das Läuferelement 3 tragende Halterung 6 ist feststehend, das heisst, das Transformationselement ist so eingesetzt, dass die das Läuferelement 3 tragende Halterung 6, bezogen auf die Zentrumsachse 10, weder verschiebbar noch drehbar angeordnet ist. Der Wickel 2 hingegen ist um die Zentrumsachse 10 drehbar und parallel zur Zentrumsachse 10 verschiebbar gelagert. Vorzugsweise am Abstützungselement 12 oder 14 ist also ein Drehantrieb anzukoppeln und auch die Längsbewegung zu nutzen.

Basisvariante 4: Das Transformationselement ist so eingesetzt, dass die das Läuferelement 3 tragende Halterung 6 gegen ein Verdrehen um die Zentrumsachse 10 gesichert, jedoch parallel zur Zentrumsachse 10 verschiebbar ist. Der Wickel 2 ist um die Zentrumsachse 10 drehbar gelagert und gegen eine zur Zentrumsachse 10 parallele Verschiebung gesichert. Vorzugsweise am Abstützungselement 12 oder 14 ist also ein Drehantrieb anzukoppeln und die Längsbewegung der Halterung 6 ist zu nutzen.

Fig. 2 zeigt das Transformationselement in einer Ausführungsform, in welcher die bezüglich der Zentrumsachse 10 konzentrisch zum Wickel 2 angeordnete Halterung 6 kernartig innerhalb des Wickels 2 liegt.

In der Fig. 3 ist eine weitere Ausführungsform des Transformationselements dargestellt, in welcher eine bezüglich der Zentrumsachse 10 konzentrisch zum Wickel 2 angeordnete Halterung 6a des Läuferelements 3 mantelartig ausserhalb des Wickels 2 liegt. Das erste Ende 11 des Bandes 1 liegt an einem Abstützungselement 12a auf, welches die erste Wickelzone 4 gegen eine axiale Verschiebung in einer Richtung R auf der Zentrumsachse 10 sichert. Das zweite Ende 13 des Bandes 1 liegt an einem weiteren Abstützungselement 14a auf, welches die zweite Wickelzone 5 gegen eine axiale Verschiebung entgegen der Richtung R auf der Zentrumsachse 10 sichert.

Dadurch, dass das Läuferelement 3 zwischen benachbarten Windungen des Wickels 2 eingreift und die benachbarten Windungen aufspreizt, ergeben sich zwischen dem Läuferelement 3 und den durch das Läuferelement 3 getrennten Wickelzonen 4 und 5 Auflagezonen. Eine erste Auflagezone 17 (Fig. 1) ist eine Berührungsfläche zwischen dem Läuferelement 3 und der Oberseite des Bandes 1 und eine zweite Auflagezone 18 ergibt sich mit einer Berührungsfläche zwischen dem Läuferelement 3 und der Unterseite des Bandes 1. Mit einer Bewegung zwischen dem Läuferelement 3 und dem Wickel 2 verschieben sich auch die Auflagezonen 17 und 18.

Durch Ausnutzung der Materialelastizität des Bandes 1 hat das Transformationselement die vorteilhafte Eigenschaft, dass das Läuferelement 3 in einem Raum in den aufgespreizten Wickel 2 eingreift, der ein Vielfaches höher sein kann, als die pro Umdrehung bewirkte Längsbewegung oder Steigung, welche gleich der Höhe h (Fig. 2) des Bandes 1 ist. Der besagte Raum ist für eine möglichst reibungsarme Lagerung des Läuferelements 3 nutzbar. Das Transformationselement ermöglicht also eine Kombination der Vorteile eines Feingewindes und einer Kugelumlaufspindel, nämlich geringe Steigung und - bei entsprechender Lagerung - geringe Reibung.

Da beim Transformationselement die Höhe h des Bandes 1 die Steigung definiert, sind, verglichen mit Bewegungsspindeln, wesentlich kleinere Steigungen realisierbar. Auch bei sehr kleiner Steigung sind durch das Transformationselement, wiederum verglichen mit Bewegungsspindeln, parallel zur Zentrumsachse 10 wesentlich grössere Kräfte übertragbar, da diese über das Läuferelement 3 auf dem gewickelten Band 1 im wesentlichen nur Flächenpressung bewirken.

Es versteht sich von selbst, dass in den Auflagezonen 17 und 18 die Reibung zwischen dem Läuferelement 3 und dem Band 1 durch an sich bekannte konstruktive Massnahmen und/oder Werkstoffauswahl entsprechend klein zu halten ist, damit bei einer Bewegungstransformation ein gewünschter hoher Wirkungsgrad erreichbar ist. Insbesondere dann, wenn zwischen der Halterung 6 und dem ersten Abstützungselement 12 und/oder zwischen der Halterung 6 und dem zweiten Abstützungselement 14 grosse Kräfte zu übertragen sind, wird eine möglichst reibungsarme Lagerung des Läuferelements 3 an den Auflagezonen 17 und 18 des Bandes wesentlich.

Die in Fig. 1 und Fig. 2 angedeuteten Gleitlager in den Auflagezonen 17 und 18 sind in der Fig. 4 beispielhaft durch Kugelumlauf- oder Rollenelemente ersetzt. Das Läuferelement 3 weist ein an der Halterung 6 befestigtes Kugelumlaufelement 20 auf, durch welches das Läuferelement 3 in der ersten Auflagezone 17 aufliegt. Mit Vorteil weist das Läuferelement 3 ein weiteres, in der Fig. 4 nicht dargestelltes Kugelumlaufelement auf, durch welches das Läuferelement 3 in der zweiten Auflagezone 18 aufliegt. Bei einer Bewegung des Läuferelements 3 auf der Helix des Bandes 1 dreht das in der ersten Auflagezone 17 aufliegende Kugelumlaufelement 20 entgegen dem weiteren in der zweiten Auflagezone 18 aufliegenden Kugelumlaufelement.

Insbesondere dann, wenn zwischen der Halterung 6 und dem Abstützungselement 12 oder 14 grössere Kräfte zu übertragen sind, ist es nachteilig, wenn das Läuferelement 3, wie beispielsweise in der Fig. 1 dargestellt, nur in einem - bezogen auf den ganzen Kreisumfang des Wickels 2 - relativ kleinen Abschnitt im Wickel 2 eingreift, da auf die Halterung 6 ein Kippmoment wirkt, welches bei einer Rotation - bei ungenügender Lagerung der Halterung - eine übermässige Taumelbewegung bewirken kann.

Zur Verminderung des besagten Kippmoments weist das Läuferelement 3 mehrere Einzelläufer auf, welche vorteilhafterweise gleichmässig über den Kreisumfang des Wickels 2 verteilt angeordnet sind. Mit Vorteil sind die Einzelläufer an der Halterung 6 oder 6a ausserdem bezüglich der Zentrumsachse 10 auf zueinander versetzten Höhen angeordnet, so dass die Einzelläufern auf unterschiedlichen Höhen im Wickel2 eingreifen. Eine vorteilhafte Ausführungsvariante des Läuferelements 3 weist drei gleichmässig über den Kreisumfang des Wickels 2 verteilte Einzelläufer auf, von denen jeder über mindestens zwei Lager am Band 1 aufliegt.

Das Band 1 wird bei einer Bewegung des Läuferelements 3 durch das Läuferelement 3 zwischen den beiden Wickelzonen 4 und 5 verschoben, wobei das Band 1 auf Biegung beansprucht und je nach Bewegungsrichtung in der ersten Wickelzone 4 abgewickelt und in der zweiten Wickelzone 5 aufgewickelt, oder in der zweiten Wickelzone 5 abgewickelt und in der ersten Wickelzone 4 aufgewickelt wird.

Eine vom Transformationselement pro Umdrehung geforderte Längsbewegung legt direkt die erforderliche Höhe h des Bandes 1 fest. Bei gegebenem Werkstoff nimmt die Biegesteifigkeit des Bandes 1 Bekannterweise mit grösser werdender Dicke des Bandes 1 zu. Bei relativ grosser Steigung, also bei grosser Höhe h des Bandes 1 wird der erreichbare Wirkungsgrad des Transformationselements durch eine relativ grosse Biegesteifigkeit des Bandes 1 emiedrigt. Die Biegesteifigkeit des Bandes 1 kann verkleinert werden, wenn das Band 1 mehrere ineinandergeschraubte, relativ dünne Einzelbänder aufweist, die so ausgewählt werden, dass die Summe der einzelnen Höhen der Einzelbänder gleich der gewünschten Steigung ist. Die dünnen Einzelbänder können auch als Schichten des Bandes 1 aufgefasst werden.

In Ausführungsvarianten des Transformationselements, in denen das Band 1 mehrere ineinandergeschraubte Einzelbänder und das Läuferelement 3 mehrere Einzelläufer aufweist, sind die Einzelläufer auf verschiedenen Einzelbändern oder aber auf einem einzigen Einzelband, nämlich einem am Band 1 aussen liegenden Einzelband, also gleichsam auf einer Aussenschicht des Bandes 1 positionierbar. Je nach Grösse einer Kraft, die über das Transformationselement zu übertragen ist, oder je nach zulässiger Belastung einer Auflagezone 17 oder 18 (Fig. 1), werden das Läuferelement 3 beziehungsweise die Einzelläufer mehr oder weniger Lagerelemente aufweisen.

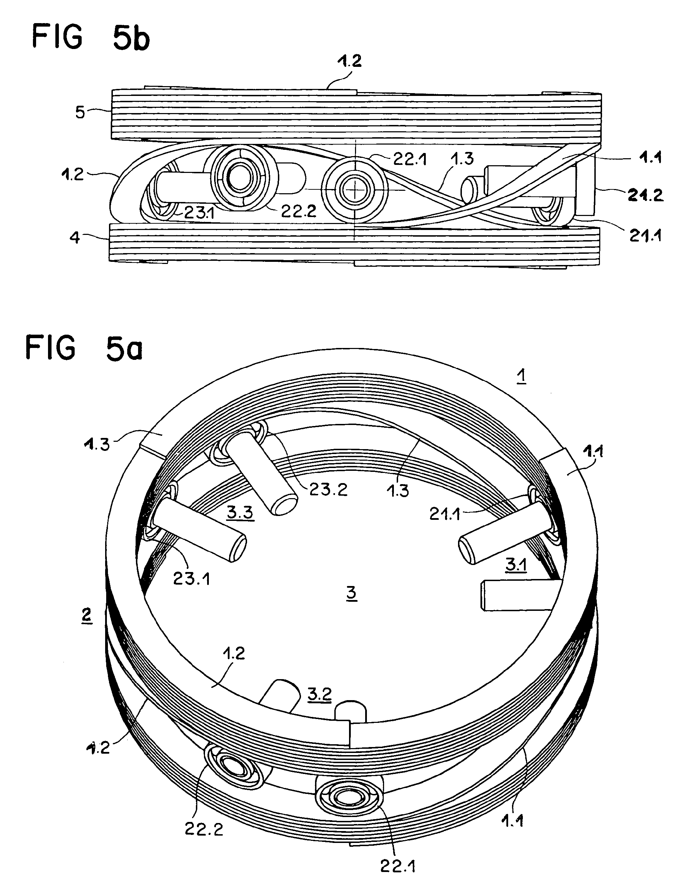

In der Fig. 5a weist das Band 1 ein erstes Einzelband 1.1, ein zweites Einzelband 1.2 und ein drittes Einzelband 1.3 auf. Die drei Einzelbänder 1.1, 1.2 und 1.3 sind ineinandergeschraubt zum Wickel 2 aufgewickelt. Das Läuferelement 3 weist einen ersten Einzelläufer 3.1, einen zweiten Einzelläufer 3.2 und einen dritten Einzelläufer 3.3 auf. Die drei Einzelläufer 3.1, 3.2 und 3.3 sind vorteilhafterweise gleichmässig über den Kreisumfang des Wickels 2 verteilt angeordnet, wobei die drei Einzelläufer 3.1, 3.2 und 3.3 auf verschiedenen Einzelbändern 1.1, 1.2 und 1.3 positioniert in den Wickel 2 eingreifen.

Der erste Einzelläufer 3.1 weist ein unteres Kugelumlaufelement 21.1 und ein oberes Kugelumlaufelement 21.2 (Fig. 5b) auf, wobei das untere Kugelumlaufelement 21.1 am dritten Einzelband 1.3 und das obere Kugelumlaufelement 21.2 am ersten Einzelband 1.1 aufliegt.

Der zweite Einzelläufer 3.2 weist ein unteres Kugelumlaufelement 22.1 und ein oberes Kugelumlaufelement 22.2 auf, wobei das untere Kugelumlaufelement 22.1 am ersten Einzelband 1.1 und das obere Kugelumlaufelement 22.2 am zweiten Einzelband 1.2 aufliegt.

Der dritte Einzelläufer 3.3 weist ein unteres Kugelumlaufelement 23.1 und ein oberes Kugelumlaufelement 23.2 auf, wobei das untere Kugelumlaufelement 23.1 am zweiten Einzelband 1.2 und das obere Kugelumlaufelement 23.2 am dritten Einzelband 1.3 aufliegt.

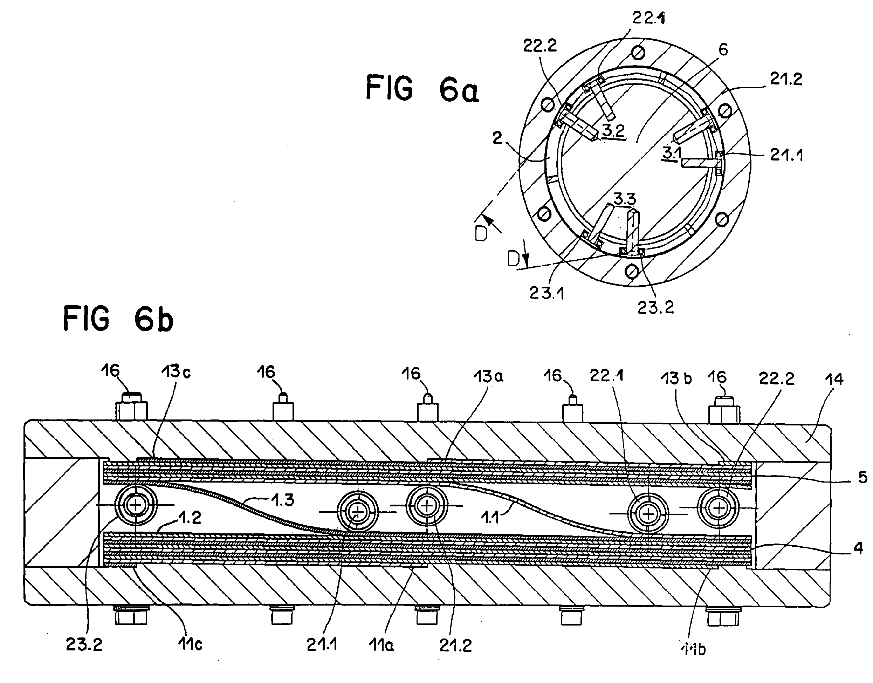

In der Fig. 6a ist das den ersten Einzelläufer 3.1, den zweiten Einzelläufer 3.2 und den dritten Einzelläufer 3.3 aufweisende Läuferelement 3 an der innerhalb des Wickels 2 angeordneten Halterung 6 befestigt. Fig. 6b zeigt eine geschnittene Abwicklung D-D des Transformationselements gemäss Fig. 6a.

Mit Vorteil sind die Einzelläufer 3.1, 3.2 oder 3.3 bezüglich der Zentrumsachse 10 axial versetzt an der Halterung 6 angeordnet, da jeder Einzelläufer 3.1, 3.2 oder 3.3 zwischen verschiedenen Einzelbändern 1.1, 1.2 und 1.3 und dadurch auf unterschiedlicher Höhe im Wickel 2 eingreift.

Erste Enden 11 a, 11 b und 11 c der drei Einzelbänder 1.1, 1.2 und 1.3 sind durch das erste Abstützungselement 12 abgestützt (Fig. 6b). In gleicher Weise sind zweite Enden 13a, 13b und 13c der drei Einzelbänder 1.1, 1.2 und 1.3 durch das zweite Abstützungselement 14 abgestützt.

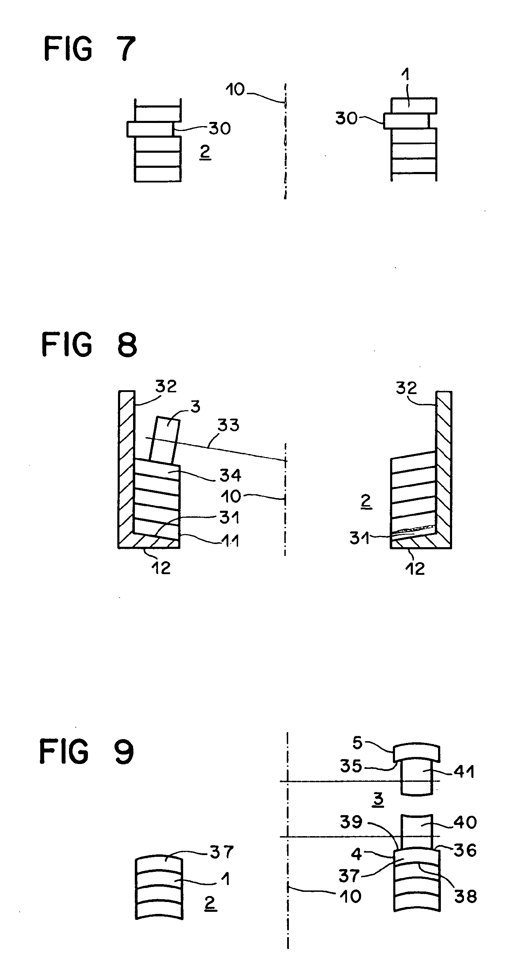

Durch eine Bewegung des Läuferelements 3 auf der Helix des Wickels 2 und eine entsprechende Kraftübertragung besteht die Gefahr, dass eine Windung 30 des Wickels 2 gegenüber der Zentrumsachse 10 verschoben wird (Fig. 7). Diese Gefahr wird durch eine vorteilhafte Ausgestaltung des Querschnitts des gewickelten Bands 1 oder durch eine vorteilhafte Ausgestaltung des Abstützungselements 12 oder 14 oder des Wickels 2 vermindert.

In Fig. 8 weist eine vorteilhafte Ausgestaltung des ersten Abstützungselements 12 eine gegen die Zentrumsachse 10 geneigte schräge Auflagefläche 31 auf, auf der das erste Ende 11 des Bands 1 aufliegt. Ausserdem ist am ersten Abstützungselement 12 ausserhalb des Wickels 2 ein Mantel 32 hochgezogen, durch den der Wickel 2 gegen quer zur Zentrumsachse 10 wirkende Kräfte fixiert ist. Durch die schräge Auflagefläche 31 ergibt sich eine zur Zentrumsachse 10 schief liegende Drehachse 33 des Läuferelements 3. Mit Vorteil hat das Band 1 eine an die schräge Auflagefläche 31 angepasste Querschnittsfläche 34 in der Form eines schiefwinkligen Parallelogramms.

In einer in Fig. 9 dargestellten vorteilhaften Ausgestaltung des Bandes 1 ist eine Bandunterseite 35 und eine Bandoberseite 36 derart gekrümmt ausgestaltet, dass eine Querschnittsfläche 37 einer Windung 37 durch eine konkave Linie 38 an die vorangehende Windung und durch eine konvexe Linie 39 an die nachfolgende Windung angrenzt. Dadurch, dass die Bandunterseite 35 und die Bandoberseite 36 gekrümmt sind, wird die Gefahr, dass einzelne Windungen des Wickels 2 gegenüber der Zentrumsachse 10 verschoben werden, vermindert. Eine untere Lauffläche 40 und eine obere Lauffläche 41 des Läuferelements 3 sind mit Vorteil der gewählten Krümmung des Bandes 1 angepasst.

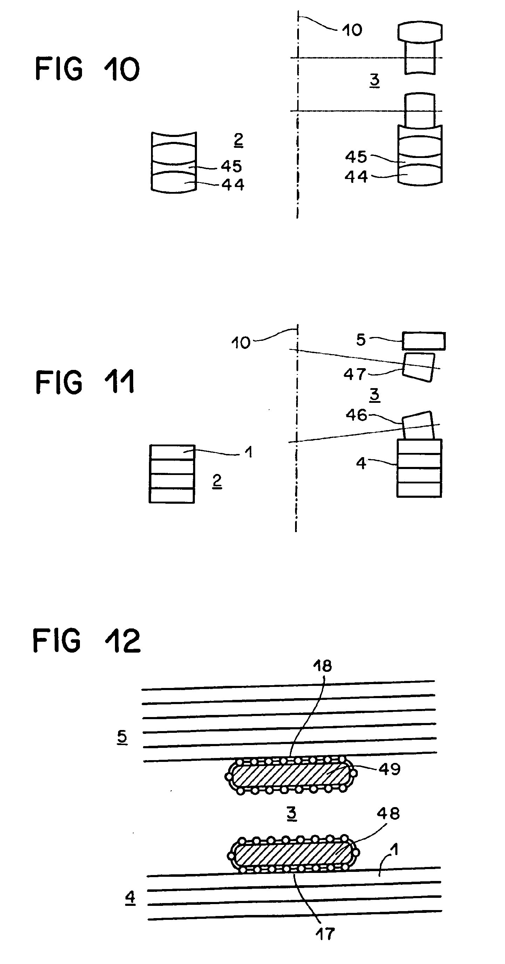

In einer in Fig. 10 dargestellten weiteren vorteilhaften Ausgestaltung des Bandes 1 sind zwei Einzelbänder 44 und 45 mit unterschiedlichen Querschnittsformen ineinandergeschraubt. Obere und untere Begrenzungslinien einer flachen Querschnittsform eines ersten Einzelbands 44 sind konvex gekrümmt. Obere und untere Begrenzungslinien eines flachen zweiten Einzelbands 45 hingegen sind konkav gekrümmt. Die ineinander geschraubten Einzelbänder 44 und 45 bewirken, dass auf eine Windung mit konkav gestalteter Querschnittsfläche zwischen Windungen mit konvex gestalteten Querschnittsflächen liegt. Dadurch wird die Gefahr, dass einzelne Windungen des Wickels 2 gegenüber der Zentrumsachse 10 verschoben werden, vermindert. Laufflächen des Läuferelements 3 sind mit Vorteil der gewählten Krümmung der Einzelbänder 44 und 45 angepasst.

In der Fig. 11 weist das Läuferelement 3 ein unteres, auf der ersten Wickelzone 4 aufliegendes Kegelrollenelement 46 und ein oberes, auf der zweiten Wickelzone 5 aufliegendes Kegelrollenelement 47 auf. Die Kegel der beiden Kegelrollenelemente 46 und 47 sind derart angeordnet, dass die Kegelspitze jeweils gegen die Zentrumsachse 10 ausgerichtet ist, so dass die Kegelrollenelemente 46 und 47 bei einer Bewegung des Läuferelements 3 auf der Helix des Bandes 1 abrollen ohne zu rutschen, wodurch der Wirkungsgrad der Bewegungsumwandlung erhöht wird.

In der Fig. 12 weist das Läuferelement 3 ein unteres, auf der ersten Wickelzone 4 aufliegendes, langgezogenes Kugelumlaufelement 48 und ein oberes, auf der zweiten Wickelzone 5 aufliegendes, langgezogenes Kugelumlaufelement 49 auf. Durch den Einsatz der beiden langgezogenen Kugelumlaufelemente 48 und 49 kann eine Belastung in den Auflagezonen 17 und 18 des Bandes 1 besonders gering gehalten werden.

Das zu einem Wickel 2 gewickelte Band 1 kann in weiteren Ausführungsvarianten des Transformationselements über die Länge des Bandes 1 unterschiedlich dick ausgebildet sein.

In einer ersten Variante des Bandes 1 nimmt die in der Fig. 2 mit h bezeichnete Dicke des Bandes 1 mit zunehmender Länge des Bandes 1 linear zu. Dadurch wird mit dem Transformationselement ein nichtlinearer Hub erreicht, der beispielsweise bei einer Antriebsrichtung im Uhrzeigersinn progressiv, und bei einer Antriebsrichtung gegen den Uhrzeigersinn degressiv verläuft.

In einer zweiten Variante des Bandes 1 variiert die in der Fig. 2 mit h bezeichnete Dicke des Bandes 1 über die Länge des Bandes 1 stetig, indem die Dicke abwechselnd zu und abnimmt. Dadurch wird mit dem Transformationselement ein nichtlinearer Hub erreicht, der bei gleichbleibender Antriebsrichtung abwechselnd progressiv und degressiv verläuft.

In einer weiteren Variante des Transformationselements, weist das Abstützungselement 12 und / oder 14 (Fig. 2) eine derart gekrümmte Oberfläche auf, dass das Ende 11 oder 13 des Bandes 1 beispielsweise auf einer sattelförmigen Fläche aufliegt. Durch die nicht plane Oberfläche des Abstützungselements 12 und / oder 14 wird der an sich helixförmigen Bewegung des Läuferelements 3 eine weitere über eine Umdrehung periodisch oszillierende Längsbewegung überlagert.

Durch eine Kombination des eine gekrümmte Oberfläche aufweisenden Abstützungselement 12 und / oder 14 mit einer über die Länge des Bandes 1 variablen Dicke des Bandes 1, lassen sich durch das Transformationselement aus einer Rotation weitere Muster für die Längsbewegung erreichen.

### Bezugszeichen

- 1: Band

- 1.1: Einzelband, erstes
- 1.2: Einzelband, zweites
- 1.3: Einzelband, drittes

- 2: Wickel
- 3: Läuferelement

- 3.1: Einzelläufer, erster
- 3.2: Einzelläufer, zweiter
- 3.3: Einzelläufer, dritter

- 4: Wickelzone, erste
- 5: Wickelzone, zweite
- 6: Halterung
- 6a: Halterung

- 10: Zentrumsachse
- 11: Ende des Bandes, erstes
- 11a, 11b, 11c: Ende des Einzelbandes, erstes
- 12, 12a: Abstützungselement, erstes
- 13: Ende des Bandes, zweites
- 13a, 13b, 13c: Ende des Einzelbandes, zweites
- 14, 14a: Abstützungselement, zweites
- 15: Distanzhülse
- 16: Schraubverbindung
- 17: Auflagezone, erste
- 18: Auflagezone, zweite

- 20: Kugelumlaufelement

- 21.1: Kugelumlaufelement, unteres
- 21.2: Kugelumlaufelement, oberes
- 22.1: Kugelumlaufelement, unteres
- 22.2: Kugelumlaufelement, oberes
- 23.1: Kugelumlaufelement, unteres
- 23.2: Kugelumlaufelement, oberes

- 30: Windung
- 31: schräge Auflagefläche
- 32: Mantel
- 33: Drehachse
- 34: Querschnittsfläche
- 35: Bandunterseite
- 36: Bandoberseite
- 37: Querschnittsfläche
- 38: konkave Linie

- 39: konvexe Linie
- 40: Lauffläche, untere
- 41: Lauffläche, obere

- 44: konvex gestaltetes Einzelband
- 45: konkav gestaltetes Einzelband
- 46: unteres Kegelrollenelement
- 47: oberes Kegelrollenelement
- 48: unteres langezogenes Kugelumlaufelement
- 49: oberes langezogenes Kugelumlaufelement

- R: Richtung
- h: Höhe des Bandes

## Patentansprüche

1. Transformationselement zur Umwandlung einer Drehbewegung in eine Längsbewegung, **gekennzeichnet durch**
ein mehrere Windungen aufweisendes, spiralförmig entlang einer Zentrumsachse (10) zu einem Wickel (2) aufgewickeltes Band (1), wobei ein Ende (11) des Bandes (1) gegen eine zur Zentrumsachse (10) parallele, in eine erste Richtung (R) gerichtete Verschiebung gesichert ist, und
ein zwischen zwei Windungen des Wickels (2) angeordnetes und an einer Halterung (6; 6a) befestigtes Läuferelement (3), wobei das Läuferelement (3) **durch** Drehen der Halterung (6; 6a) oder der Wickels (2) um die Zentrumsachse (10) auf dem Band (1) verschiebbar ist.

2. Transformationselement nach Anspruch 1, **dadurch gekennzeichnet,**
**dass** auch ein zweites Ende (13) des Bandes (1) gegen eine zur Zentrumsachse (10) parallele, entgegen der ersten Richtung (R) gerichtete Verschiebung gesichert ist.

3. Transformationselement nach Anspruch 1, **gekennzeichnet durch** ein erstes Abstützungselement (12; 12a), an dem das erste Ende (11) des Bandes (1) aufliegt und **durch** welches das Band (1) gegen eine zur Zentrumsachse (10) parallele, in die erste Richtung (R) gerichtete Verschiebung gesichert ist.

4. Transformationselement nach Anspruch 2 oder 3, **gekennzeichnet durch** ein zweites Abstützungselement (14; 14a), an dem das zweite Ende (13) des Bandes (1) aufliegt und **durch** welches das zweite Ende (13) gegen eine zur Zentrumsachse (10) parallele, entgegen der ersten Richtung (R) gerichtete Verschiebung gesichert ist.

5. Transformationselement nach Anspruch 4, **dadurch gekennzeichnet, dass** die beiden Abstützungselemente (12, 14; 12a, 14a) in einem bestimmten Abstand voneinander angeordnet sind, wobei der Wickel (2) - zur Vermeidung eines axialen Spiels zwischen dem Läuferelement (3) und dem Wickel (2) - zwischen den beiden Abstützungselementen (12; 14) eingespannt ist.

6. Transformationselement nach einem vorangehenden Anspruch, **dadurch gekennzeichnet,**
**dass** das Band (1) eine konstante Höhe (h) aufweist, so dass aneinanderliegende Windungen des Wickels (2) eine konstante Steigung aufweisen.

7. Transformationselement nach einem der Ansprüche 1 bis 5, **dadurch gekennzeichnet,**
**dass** das Band (1) eine zunehmende Höhe (h) aufweist, so dass aneinanderliegende Windungen des Wickels (2) eine progressive Steigung aufweisen.

8. Transformationselement nach einem der Ansprüche 1 bis 5, **dadurch gekennzeichnet,**
**dass** das Band(1) eine abnehmende Höhe (h) aufweist, so dass aneinanderliegende Windungen des Wickels (2) eine degressive Steigung aufweisen.

9. Transformationselement nach einem der Ansprüche 1 bis 5, **dadurch gekennzeichnet,**
**dass** das Band (1) eine variable Höhe (h) aufweist, so dass aneinanderliegende Windungen des Wickels (2) eine variable Steigung aufweisen.

10. Transformationselement nach einem vorangehenden Anspruch, **dadurch gekennzeichnet,**
**dass** die Querschnittsfläche des Bandes (1) ein Parallelogramm ist.

11. Transformationselement nach einem vorangehenden Anspruch, **dadurch gekennzeichnet,**
**dass** das Band (1) mehrere ineinandergeschraubte Einzelbänder (1.1; 1.2; 1.3; 44; 45) aufweist.

12. Transformationselement nach einem der Ansprüche 1 bis 9, **dadurch gekennzeichnet,**
**dass** die Querschnittsfläche des Bandes (1) derart ausgestaltet ist, dass die Querschnittfläche einer Windung durch eine konkave Linie (38) an die vorangehende Windung und durch eine konvexe Linie (39) an die nachfolgende Windung angrenzt.

13. Transformationselement nach Anspruch 11, **dadurch gekennzeichnet,**
**dass** die Querschnittsfläche eines ersten Einzelbandes (45) derart ausgestaltet ist, dass die Querschnittsfläche einer Windung durch eine konkave Linie gegen eine anliegende Windung eines zweiten Einzelbandes (44) hin abgeschlossen ist, wobei die Querschnittsfläche des zweiten Einzelbandes (44) derart ausgestaltet ist, dass die Querschnittsfläche einer Windung durch eine konvexe Linie gegen eine anliegende Windung des ersten Einzelbandes (45) hin abgeschlossen ist.

14. Transformationselement nach einem vorangehenden Anspruch, **dadurch gekennzeichnet,**
**dass** das Abstützungselement (12; 12a; 14; 14a) gegen den Wickel (2) hin eine derart wellige Oberfläche aufweist, dass eine über eine Umdrehung periodisch abwechselnd progressive - und degressive Steigung erreichbar ist.

15. Transformationselement nach einem vorangehenden Anspruch, **dadurch gekennzeichnet,**
**dass** das Läuferelement (3) Gleitlager aufweist.

16. Transformationselement nach einem der Ansprüche 1 bis 14, **dadurch gekennzeichnet,**
**dass** das Läuferelement (3) wenigstens ein Rollen - oder Kugelumlaufelement (20; 46; 47; 48; 49) aufweist.

17. Transformationselement nach Anspruch 16, **dadurch gekennzeichnet,**
**dass** das Läuferelement (3) Kegelrollen (46; 47) aufweist, wobei wenigstens eine erste Kegelrolle (46) auf einem abgelaufenen Wickelteil (4) abrollt und wenigstens eine zweite Kegelrolle (47) auf einem noch abzulaufenden (5) Wickelteil abrollt, wobei die erste Kegelrolle (46) gegenläufig zur zweiten Kegelrolle (47) dreht.

18. Transformationselement nach einem vorangehenden Anspruch, **dadurch gekennzeichnet,**
**dass** das Läuferelement (3) durch mehrere Einzelläufer (3.1; 3.2; 3.3) verwirklicht ist.

19. Transformationselement nach Anspruch 18, **dadurch gekennzeichnet,**
**dass** das Läuferelement (3) durch drei Einzelläufer (3.1, 3.2, 3.3) verwirklicht ist, welche gleichmässig über den Kreisumfang des Wickels (2) verteilt angeordnet sind.

20. Transformationselement nach Anspruch 19, **dadurch gekennzeichnet,**
**dass** das Band (1) drei ineinandergeschraubte Einzelbänder(1.1, 1.2, 1.3) aufweist und die drei Einzelläufer (3.1, 3.2, 3.3) auf verschiedenen Einzelbändern (1.1, 1.2 und 1.3) positioniert in den Wickel (2) eingreifen.

21. Transformationselement nach einem der Ansprüche 18 bis 20, **dadurch gekennzeichnet,**
**dass** wenigsten ein Einzelläufer (3.1) zu einem weiteren Einzelläufer (3.2) bezüglich der Zentrumsachse (10) axial versetzt an der Halterung (6; 6a) angeordnet ist.

22. Transformationselement nach einem vorangehenden Anspruch, **dadurch gekennzeichnet,**
**dass** das Band (1) durch das Abstützungselement (12; 12a; 14; 14a) auch gegen Verdrehung um die Zentrumsachse (10) gesichert ist.

23. Transformationselement nach einem vorangehenden Anspruch, **dadurch gekennzeichnet,**
**dass** die bezüglich der Zentrumsachse (10) konzentrisch zum Wickel (2) angeordnete Halterung (6) des Läuferelements (3) kernartig innerhalb des Wickels (2) liegt.

24. Transformationselement nach einem der Ansprüche 1 bis 22, **dadurch gekennzeichnet,**
**dass** die bezüglich der Zentrumsachse (10) konzentrisch zum Wickel (2) angeordnete Halterung (6a) des Läuferelements (3) mantelartig ausserhalb des Wickels (2) liegt.

25. Verfahren zur Umwandlung einer Drehbewegung in eine Längsbewegung mit Hilfe eines zu einem einlagigen Wickel (2) geformten Bandes (1), wobei der Wickel (2) mehrere aneinanderliegende Windungen aufweist,
**gekennzeichnet durch** die Schritte
Anordnen eines Läuferelements (3) zwischen zwei benachbarten Windungen derart, dass der Wickel (2) **durch** das Läuferelement (3) aufgespreizt wird,
Abstützen einer äussersten Windung des Wickels (2) auf einer Seite des Wickels (2), gegen welche die Längsbewegung auszuführen ist,
Erzeugen einer relativen Drehbewegung zwischen dem Wickel (2) und dem Läuferelement(3) um eine gemeinsame Zentrumsachse (10) derart, dass das Läuferelement (3) in einem bestimmten Abstand zur Zentrumsachse (10) auf einer **durch** den Wickel (2) bestimmten helixförmigen Bahn um die Zentrumsachse (10) und längs der Zentrumsachse (10) bewegt wird,
Nutzen einer längs der Zentrumsachse (10) zwischen dem Läuferelement (3) und einem Ende (11; 13) des Bandes (1) auftretenden Bewegungskomponente.

26. System zur Durchführung eines Verfahrens nach Anspruch 25, **gekennzeichnet durch** ein Antriebselement, **durch** das die relative Drehbewegung zwischen dem Wickel (2) und dem Läuferelement (3) erzeugbar ist.

27. System nach Anspruch 26,
**gekennzeichnet durch** ein Abtriebselement, **durch** das die längs der Zentrumsachse (10) zwischen dem Läuferelement (3) und einem Ende (11; 13) des Bandes (1) auftretende Bewegungskomponente nutzbar ist.
